# EUROPÄISCHE PATENTSCHRIFT

(11) **EP 2 715 300 B1**
(45) Veröffentlichungstag und Bekanntmachung des Hinweises auf die Patenterteilung: **10.08.2016**
(21) Anmeldenummer: 12723876.4
(22) Anmeldetag: 31.05.2012
(51) Int. Cl.: G01L 9/00, G01L 15/00, G01L 1/16, G01L 9/06, G01L 9/08, G01L 1/18

(54) **SENSOR FÜR DIE MESSUNG VON DRUCK UND/ODER KRAFT**
SENSOR FOR MEASURING PRESSURE AND/OR FORCE
CAPTEUR DE MESURE DE PRESSION ET/OU DE FORCE

(30) Priorität: 03.06.2011 AT 8282011
(43) Veröffentlichungstag der Anmeldung: 09.04.2014
(73) Patentinhaber: Piezocryst Advanced Sensorics GmbH, 8020 Graz (AT)
(72) Erfinder: SCHRICKER, Alexander, A-8046 Graz (AT); MAYER, Andreas, A-8052 Graz (AT); KRÖGER, Dietmar, A-8010 Graz (AT)
(74) Vertreter: Patentanwälte Pinter & Weiss OG
(86) Internationale Anmeldenummer: PCT/EP2012/060242
(87) Internationale Veröffentlichungsnummer: WO 2012/164016

(56) Entgegenhaltungen:
- WO-A1-2007/128149
- JP-A- 2004 226 295
- US-A- 4 995 014
- US-A1- 2006 137 456

## Beschreibung

Die Erfindung betrifft einen Sensor für die Messung von Druck und/oder Kraft, umfassend zumindest eine Messanordnung mit zumindest einem auf Stauchung beanspruchten piezoelektrischen Messelement für die dynamische Druck- bzw. Kraftmessung, sowie eine Membran zur Einleitung des Drucks bzw. der Kraft auf zumindest das piezoelektrische Messelement und eine weitere, auf einem anderen physikalischen Messprinzip beruhende Messanordnung für eine statische Druck- bzw. Kraftmessung.

Piezoelektrische Drucksensoren nutzen den Effekt, dass sich die Oberflächen piezoelektrischer Materialien unter mechanischer Belastung proportional dazu elektrisch aufladen, so dass sich in weiterer Folge daraus ein prozessierbares Ladungssignal erzeugen lässt. Derartige Sensoren sind aktive Sensoren, die bestens für die dynamische Messtechnik geeignet sind.. Daneben sind auch piezoresistive Drucksensoren bekannt, die unter mechanischer Spannung ihren elektrischen Widerstand verändern.

In der US 2006137456 A ist ein Sensor beschrieben, der eine Galliumnitrit-Membran aufweist, die auf einem Substrat aufliegt, das zur Bildung einer Kavität geätzt ist. Diese Membran zeigt sowohl eine kapazitive Antwort als auch einen Piezoeffekt auf externe Stimuli. Der Sensor weist weiters einen Messkreis für zumindest eine dieser Antworten auf und kann zur Messung externer Stimuli wie Druck, Kraft oder mechanischer Vibrationen verwendet werden.

Um mit nur einem Sensor sowohl eine dynamische als auch eine statische Druckmessung zu ermöglichen, ist in der JP 2004226294 A vorgeschlagen worden, an einem Substrat mit piezoelektrischem Material an zwei Oberflächen Elektroden auszubilden. Eine Membran mit Isoliermaterial und einer dritten Elektrode auf einer Seite und einer Dummy-Elektrode auf der anderen Seite ist vorgesehen, wobei das Substrat derart auf die Membran geklebt ist, dass einander die zweite und die dritte Elektrode gegenüber liegen. Damit kann der statische Druck aus der Kapazität zwischen der zweiten und der dritten Elektrode ermittelt werden, und der dynamische Druck kann aus dem piezoelektrischen Effekt des Substrates ermittelt werden.

Einen identen Aufbau zeigt die JP2004226295. Wie bereits ausgeführt werden jedoch für die statische und dynamische Messung Elektroden genutzt, welche auf unterschiedlichen Membranen angeordnet sind.

Die US 4,995,014 zeigt eine Sensoranordnung, welche zur Messung statischer und dynamischer Drücke geeignet ist. Dazu ist einerseits ein "statischer" Sensor mit einer eigenen Membran vorgesehen. Dieser ist von einer Reihe, zur dynamischen Messung vorgesehenen, Sensoren umgeben, welche wiederum jeweils eine eigene Membran aufweisen.

Die Aufgabe der vorliegenden Erfindung war nun eine weitere Ausführungsform eines Sensors für die Druck- oder Kraftmessung wie eingangs angegeben, die eine verbesserte Erfassung von statischen und dynamischen Effekten ermöglicht.

Zur Lösung dieser Aufgabe ist der Sensor erfindungsgemäß dadurch gekennzeichnet, dass sowohl für die dynamische als auch für die statische Druck- bzw. Kraftmessung dieselbe Membran (3) vorgesehen ist. Damit ist einerseits mit hoher Genauigkeit und Sicherheit neben der parallelen, phasenrichtigen Messung von dynamischen und statischen Drücken bzw. Kräften auch eine Selbsttest-Funktion des Sensors möglich, wenn die Dynamik in den Bereich des Messprinzips für statische Messungen absinkt. Durch die Kombination statischer und dynamischer Messung ergibt sich ein phasenrichtiges Signal höherer Bandbreite.

Eine erste Ausführungsvariante eines derartigen Sensors ist dadurch gekennzeichnet, dass zumindest ein durch den Druck und/oder die Kraft beeinflusster Bereich des Sensors mit einer Dehnmessstruktur für die statische Druck- bzw. Kraftmessung versehen ist.

Dabei kann die Dehnmessstruktur auf einer Fläche zumindest eines durch den Druck oder die Kraft beaufschlagten Messelementes aufgebracht sein, wobei das Messelement vorzugsweise im transversalen Modus betrieben ist.

Als weitere erfindungsgemäße Variante zur Verbindung einer dynamischen mit einer statischen Druck- bzw. Kraftmessung kann der eingangs beschriebene Sensor auch dadurch gekennzeichnet sein, dass zumindest ein piezoelektrisches Element für die statische Druck- bzw. Kraftmessung als piezoelektrischer, auf Stauchung durch die Membran beanspruchter Resonator betrieben ist.

Wenn gemäß einer weiteren Ausführungsform eine Dehnmessstruktur in einer von der Richtung der Stauchung abweichenden Orientierung vorgesehen ist, vorzugsweise normal auf diese Richtung, kann aus dem Verhältnis der Signale aller Dehnmessstrukturen die temperaturbedingte Dimensionsänderung bestimmt und damit eine Temperaturkompensation durchgeführt werden.

Eine Temperaturkompensation kann aber auch gemäß einer anderen Ausführungsform des Sensors durchgeführt werden, wenn zumindest eine weitere Dehnmessstruktur in einem vom Druck und/oder der Kraft unbeeinflussten Bereich des Sensors vorgesehen ist.

In der nachfolgenden Beschreibung soll die Erfindung durch vorteilhafte Ausführungsbeispiele und unter Bezugnahme auf die beigefügten Zeichnungen näher erläutert werden.

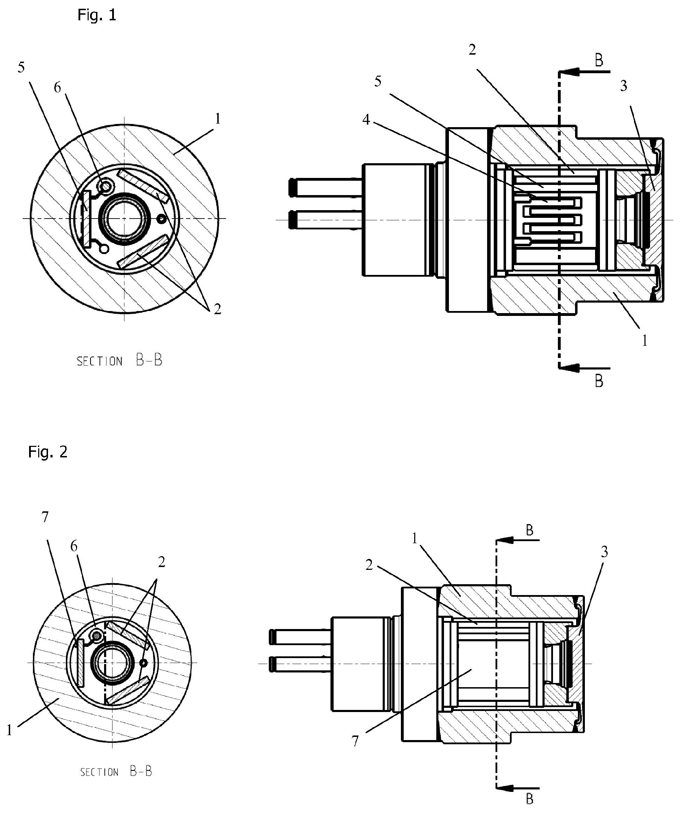

Dabei zeigt die Fig. 1 einen erfindungsgemäßen Sensor in einer Variante mit statischer Druckmessung durch Dehnmessstreifen, wobei in der linken Seite der Abbildung ein Querschnitt in Höhe der Linie B-B der rechten Seite zu sehen ist, und wobei die rechte Seite der Abbildung ein Längsschnitt entlang der Ebene B-B der linken Seite ist, und die Fig. 2 ist ein erfindungsgemäßer Sensor in einer anderen Ausführungsform mit statischer Druckmessung mittels piezoelektrischem Resonator, wobei wiederum in der linken Seite der Abbildung ein Querschnitt in Höhe der Linie B-B der rechten Seite zu sehen ist, und wobei die rechte Seite der Abbildung ein Längsschnitt entlang der Ebene B-B der linken Seite ist.

Der in Fig. 1 dargestellte Sensor weist in einem Sensorgehäuse 1 zwei piezoelektrische Messelemente 2 auf, die vorzugsweise im transversalen Modus betrieben werden, um dynamisch Druck zu messen. Die piezoelektrischen Messelemente 2 sind stehend im Sensorgehäuse 1 gehalten und sind vorgespannt. Über die Membran 3 wird Kraft auf die Stirnflächen der Messelemente 2 eingeleitet, wobei diese proportional zur anliegenden Kraft gestaucht werden. Diese Stauchung wird genützt, um die unterschiedlichen Messsignale zu erzeugen.

Für eine statische Druckmessung nach einem anderen physikalischen Prinzip ist eine Dehnmessstruktur 4 vorgesehen, die auf einem oder mehreren zusätzlichen Elementen 5 aufgebracht ist. Beispielsweise ist - wie in Fig. 1 gezeigt - auf der Elektrodenfläche eines oder mehrerer der piezoelektrischen Messelemente 5 mittels Dünnschichttechnik ein Dielektrikum und anschließend eine Dehnmessstruktur 4 aufgebracht. Da somit das Signal für die dynamische Messung als auch das Signal für die statische Messung über dieselbe Membran 3 erzeugt werden, ist eine phasenrichtige Messung beider Signale möglich.

Wahlweise werden Piezokristalle 5 nicht für die piezoelektrische Messfunktion, sondern nur als Träger für die Dehnmessstruktur 4 verwendet, die in diesem Fall direkt auf die nicht leitende Kristallfläche aufgebracht ist. Diese Kristalle 5 müssen nicht notwendigerweise denselben Schnittwinkel ausweisen wie jene mit piezoelektrischer Messfunktion. Prinzipiell könnten Dehnmessstrukturen 4 auch auf dem Sensorgehäuse 1 oder jeglichen anderen Bereichen vorgesehen sein, solange diese durch den zu messenden Druck bzw. die Kraft beeinflusst, d.h. verformt, werden.

Als mögliche Ausführungsformen der Kontaktierung kommen beispielsweise in Frage, dass die Dehnmessstreifen 4 mit Bonding Technologie kontaktiert sind, oder dass die Kontaktierung über Pads 6 auf den Auflageflächen vorgenommen wird, wobei dann die Leiterbahnen auf den Elementen bis zur Stirnfläche geführt und entsprechend über Leiterbahnen auf den Auflageflächen zu Anschlussdrähten gebracht sind. Um den Einfluss des Übergangswiderstands dieser Kontaktierung zu minimieren können die Kontakte doppelt ausgeführt sein (4-Leiter Anbindung).

Eine statische Druckmessung kann aber auch, wie dies beim Sensor der Fig. 2 beispielhaft dargestellt ist, über ein oder mehrere Messelemente 7 bewerkstelligt werden, die als piezoelektrischer Resonator (Dickenscherschwinger) betrieben sind. Die durch Kraft auf die Messelemente 7 entstehende Stauchung bewirkt eine Verschiebung der Resonanzfrequenz, welche direkt proportional zum anliegenden Druck ist. Die Anregung der Messelemente 7 erfolgt über Elektroden an den Seitenflächen der Messelemente. Diese Elektroden können mittels Bonding oder wie bei den transversalen Piezo-Messelementen 2 über die Stirnflächen kontaktiert werden. Die Auflagefläche muss entsprechend eigene voneinander elektrisch isolierte Bereiche aufweisen, wie dies schematisch durch die strichpunktierten Linie dargestellt ist.

In jedem Fall bieten alle oben vorgestellten Varianten im Überlappungsbereich von statischer und dynamischer Messung neben dem Vorteil der bereits erläuterten phasenrichtigen Messung von dynamischen und statischen Drücken bzw. Kräften weitere vorteilhafte Möglichkeiten durch geeignete Signalnachbearbeitung. So kann für die Selbsttest-Funktion des Sensors beispielsweise die Differenz der beiden Signale gebildet werden. Für eine höhere Genauigkeit des Messwertes im Überlappungsbereich könnte beispielsweise ein gegebenenfalls gewichteter Mittelwert der Signale gebildet werden.

## Patentansprüche

1. Sensor für die Messung von Druck und/oder Kraft, umfassend zumindest eine Messanordnung mit zumindest einem auf Stauchung beanspruchten piezoelektrischen Messelement (2) für die dynamische Druck- bzw. Kraftmessung, sowie eine Membran (3) zur Einleitung des Drucks bzw. der Kraft auf zumindest das piezoelektrische Messelement (2),
wobei über die Membran (3) ein Signal für die dynamische Druck- bzw. Kraftmessung erzeugt wird,
und eine weitere, auf einem anderen physikalischen Messprinzip beruhende Messanordnung (4, 7) für eine statische Druck- bzw. Kraftmessung, wobei über eine Membran (3) ein Signal für die statische Druck- bzw. Kraftmessung erzeugt wird,
**dadurch gekennzeichnet, dass**
die Signale sowohl für die dynamische als auch für die statische Druck- bzw. Kraftmessung über dieselbe Membran (3) erzeugt werden.

2. Sensor nach Anspruch 1, **dadurch gekennzeichnet, dass** zumindest ein durch den Druck und/oder die Kraft beeinflusster Bereich des Sensors mit einer Dehnmessstruktur (4) für die statische Druck- bzw. Kraftmessung versehen ist.

3. Sensor nach Anspruch 2, **dadurch gekennzeichnet, dass** die Dehnmessstruktur (4) zur statischen Druck- bzw. Kraftmessung auf einer Fläche zumindest eines durch den Druck oder die Kraft beaufschlagten Messelementes (2) aufgebracht ist, wobei das Messelement (2) vorzugsweise im transversalen Modus betrieben ist.

4. Sensor nach einem der Ansprüche 1 bis 3, **dadurch gekennzeichnet, dass** zumindest ein piezoelektrisches Element (7) für die statische Druck- bzw. Kraftmessung als piezoelektrischer, auf Stauchung durch die Membran beanspruchter Resonator betrieben ist.

5. Sensor nach einem der Ansprüche 1 bis 4, **dadurch gekennzeichnet, dass** eine Dehnmessstruktur (4) zur statischen Druck- bzw. Kraftmessung in einer von der Richtung der Stauchung abweichenden Orientierung, vorzugsweise normal auf diese Richtung, aufgebracht ist.

6. Sensor nach einem der Ansprüche 1 bis 4, **dadurch gekennzeichnet, dass** zumindest eine weitere Dehnmessstruktur (4) in einem vom Druck und/oder der Kraft unbeeinflussten Bereich des Sensors vorgesehen ist.

## Claims

1. A sensor for measuring pressure and/or force, comprising at least one measuring assembly having at least one piezoelectric measuring element (2) subjected to compressive stress for dynamic pressure and/or force measurement, and a diaphragm (3) for introducing the pressure and/or the force onto at least the piezoelectric measuring element (2) wherein a signal for the dynamic pressure and/or force measurement is generated and a further measuring assembly (4, 7) based on a different physical measuring principle for static pressure and/or force measurement, wherein a signal for the static pressure and/or force measurement is generated by a diaphragm (3) **characterized by** the signal for both the dynamic and the static pressure and/or force measurement being created by the same diaphragm (3).

2. The sensor according to claim 1, **characterized in that** at least one region of the sensor which is influenced by the pressure and/or the force is provided with a strain measuring structure (4) for the static pressure and/or force measurement.

3. The sensor according to claim 2, **characterized in that** the strain measuring structure (4) for the static pressure and/or force measurement is provided on a surface of at least one measuring element (2) to which the pressure or the force is applied, the measuring element (2) preferably being operated in transversal mode.

4. A sensor according to any one of claims 1 to 3, **characterized in that** at least one piezoelectric element (7) for the static pressure and/or force measurement is operated as a piezoelectric resonator subjected to compressive stress by the diaphragm.

5. A sensor according to any one of claims 1 to 4, **characterized in that** a strain measuring structure (4) for the static pressure and/or force measurement is provided in an orientation deviating from the direction of the compression, preferably normal relative to this direction.

6. A sensor according to any one of claims 1 to 4, **characterized in that** at least one further strain measuring structure (4) is provided in a region of the sensor which is not influenced by the pressure and/or the force.

## Revendications

1. Capteur pour la mesure de pression et/ou de force, comprenant au moins un dispositif de mesure doté d'au moins un élément de mesure piézoélectrique (2) sollicité au refoulement pour la mesure dynamique de pression ou de force, de même qu'une membrane (3) destinée à la pression ou la force au moins à l'élément de mesure piézoélectrique (2),
, un signal étant généré via la membrane (3) pour la mesure dynamique de pression ou de force,
et un autre dispositif de mesure reposant sur un autre principe de mesure physique (4, 7) pour une mesure statique de pression ou de force, un signal étant généré via une membrane (3) pour la mesure statique de pression ou de force,
**caractérisé en ce que** les signaux sont générés pour la mesure de pression ou de force aussi bien dynamique que statique via la même membrane (3).

2. Capteur selon la revendication 1, **caractérisé en ce qu'**au moins une zone du capteur influencée parla pression et/ou la forc est pourvue d'une structure de mesure d'extension (4) pour la mesure statique de pression ou de force.

3. Capteur selon la revendication 2, **caractérisé en ce que** la structure de mesure d'extension (4) pour la mesure statique de pression ou de force est montée sur une surface d'au moins un élément de mesure (2) sollicitéune pression ou une force, l'élément de mesure (2) fonctionnant de préférence en mode transversal.

4. Capteur selon une des revendications 1 à 3, **caractérisé en ce qu'**au moins un élément piézoélectrique (7) pour la mesure statique de pression ou de force fait office de résonateur piézoélectrique soumis à une déformation sous pression par la membrane.

5. Capteur selon une des revendications 1 à 4, **caractérisé en ce qu'**une structure de mesure d'extension (4) pour la mesure statique de pression ou de force est montée dans une orientation différente de la direction de déformation sous pression, de préférence normalement à cette direction.

6. Capteur selon une des revendications 1 à 4, **caractérisé en ce qu'**au moins une autre structure de mesure d'extension (4) est prévue dans une zone du capteur qui n'est pas soumise à la pression et/ou à la force.
